# FASCICULE DE BREVET EUROPEEN

(11) **EP 4 268 109 B1**
(45) Date de publication et mention de la délivrance du brevet: **29.10.2025**
(21) Numéro de dépôt: 21845104.5
(22) Date de dépôt: 23.12.2021
(51) Int. Cl.: G06F 21/60

(54) **PROCÉDÉ ET DISPOSITIF DE CONTRÔLE DE L'ACCÈS À UN SERVICE UTILISANT UNE CHAÎNE DE BLOCS**
VERFAHREN UND VORRICHTUNG ZUR STEUERUNG DES ZUGRIFFS AUF EINEN DIENST UNTER VERWENDUNG EINER BLOCKCHAIN
METHOD AND DEVICE FOR CONTROLLING ACCESS TO A SERVICE USING A BLOCKCHAIN

(30) Priorité: 23.12.2020 FR 2014097
(43) Date de publication de la demande: 01.11.2023
(73) Titulaire: Alten, 92100 Boulogne-Billancourt (FR)
(72) Inventeur: ROGER, Thierry, 35700 Rennes (FR); POINTARD, Trinity, 35000 Rennes (FR)
(74) Mandataire: Bonnet, Michel
(86) Numéro de dépôt international: PCT/IB2021/062239
(87) Numéro de publication internationale: WO 2022/137192

(56) Documents cités:
- US-A1- 2019 319 940
- US-A1- 2019 340 619

## Description

La présente invention concerne les réseaux de communication mettant en œuvre une chaîne de blocs (ou « Blockchain »), et plus précisément l'accès à un service utilisant une telle chaîne de blocs.

Dans de nombreux domaines techniques, comme par exemple celui des transactions en réseau par le biais de cryptomonnaies, on utilise ce que l'homme de l'art appelle une chaîne de blocs (ou Blockchain).

Une chaîne de blocs est une technologie implémentée dans un réseau de type pair à pair (ou « peer to peer ») pour transmettre et stocker des informations contenues dans des blocs sans organe de contrôle. Chaque bloc est ajouté aux autres blocs d'une même chaîne après un consensus entre pairs, c'est-à-dire après que chaque pair (ou nœud du réseau) l'ait vérifié puis validé. Lorsque qu'un bloc, après validation et vérification, vient s'ajouter à une chaîne existante il stocke « en lui » une empreinte numérique (ou « hash ») servant à identifier le bloc précédemment ajouté à cette chaîne de blocs à partir d'une donnée initiale, afin d'établir la liaison qui le relie au reste de la chaîne de blocs. On peut ainsi effectuer dans une chaîne de blocs des échanges sécurisés, irréfutables et pérennes, ce qui permet d'obtenir un réseau décentralisé (c'est-à-dire sans organe de contrôle), transparent, sécurisé, fiable et anonyme.

Plusieurs types de chaîne de blocs ont été proposés, et notamment ceux dits « Hyperledger Fabric » (privé et permettant de délimiter des rôles entre les pairs (ou noeuds), d'offrir des services de consensus et des applications décentralisées, et de programmer des contrats intelligents (ou « chaincodes » - programmes capables d'effectuer plusieurs types de transactions entre eux)), « Ethereum » (publique) et « Bitcoin » (publique).

Dans un réseau mettant en œuvre une chaîne de blocs de type Hyperledger Fabric coexistent des noeuds pairs (ou « peer nodes ») qui exécutent les contrats intelligents (ou chaincodes), accèdent aux données des registres, approuvent les transactions et font les intermédiaires avec les applications ou services, et des noeuds d'auteur (ou « orderer nodes ») qui assurent la cohérence de la chaîne de blocs et délivrent les transactions approuvées aux pairs du réseau et aux fournisseurs de services d'adhésion (ou MSPs (« Managed Service Providers ») - autorités de certification gérant les certificats X.509 utilisés pour authentifier les identités et rôles des membres). Le document US 2019/0340619 A1 décrit une méthode de contrôle intégral d'une chaîne d'approvisionnement du producteur au consommateur faisant appel à une chaîne de blocs et à un fournisseur d'identité.

L'invention concerne plus précisément les procédés permettant d'accéder à une chaîne de blocs à partir d'une identité d'un utilisateur fournie par un fournisseur d'identité (ou « Identity Provider »).

Actuellement, l'accès à une chaîne de blocs publique se fait de façon normalisée au moyen d'une paire de clés cryptographiques asymétriques permettant d'accéder à un compte de client à partir d'un texte arbitraire, comme par exemple BIP32, tandis que l'accès à une chaîne de blocs privée, comme par exemple Hyperledger Fabric, nécessite la fourniture d'un certificat signé par une autorité en complément d'une paire de clés asymétriques. Par conséquent, dans les chaînes de blocs publiques et privées on stocke des données permettant de se connecter à la chaîne de blocs en tant que client, en l'absence de ce dernier, et donc en récupérant ces données il s'avère possible d'accéder à cette chaîne de blocs sans être dans une session de ce client (authentifié), ce qui peut s'avérer dangereux.

L'invention est destinée à exploiter le contexte d'un client (ou utilisateur) pour permettre à ce dernier d'accéder à une chaîne de blocs, mise en œuvre dans un réseau de communication, à partir d'une authentification de cet utilisateur et sans stockage des données précitées.

Il est donc notamment proposé un procédé de contrôle, d'une part, destiné à permettre le contrôle de l'accès à un premier service utilisant une chaîne de blocs mise en œuvre dans un réseau de communication, et, d'autre part, comprenant une étape selon la revendication 1.

Ainsi, on dispose d'un service à la fois basé sur une authentification (via un fournisseur d'identité) et sur une chaîne de blocs dont l'accès dépend de clés cryptographiques directement reliées à son identité.

Le procédé de contrôle selon l'invention peut comporter d'autres caractéristiques qui peuvent être prises séparément ou en combinaison, et notamment :
- dans son étape le premier équipement de communication peut se connecter à un second équipement de communication chargé de réaliser l'authentification ;
- dans son étape on peut initialiser un générateur d'aléatoire cryptographique (par exemple de type chacha20) avec une information secrète et l'identifiant d'utilisateur afin d'obtenir un aléatoire, puis on peut générer la paire de clés cryptographiques à partir de cet aléatoire obtenu ;
- en présence de l'option précédente, dans son étape, avant l'initialisation, lorsque l'information secrète présente une taille supérieure à une taille prédéfinie on peut compresser cette information secrète (par exemple au moyen d'une fonction de hachage cryptographique) afin qu'elle présente cette taille prédéfinie ;
- dans son étape l'utilisateur peut fournir au premier service la paire de clés cryptographiques générée, dont l'une est un certificat représentatif d'une clé publique certifiée, afin d'accéder au premier service.

L'invention propose également un programme d'ordinateur téléchargeable depuis un réseau de communication et/ou enregistré sur un support lisible par ordinateur et/ou exécutable par au moins un processeur. Ce programme d'ordinateur se caractérise par le fait qu'il comprend des instructions pour l'exécution des étapes d'un procédé de contrôle du type de celui présenté ci-avant, lorsqu'il est exécuté sur au moins un équipement à processeur(s) ou au moins un ordinateur.

L'invention propose également un dispositif de contrôle destiné à contrôler l'accès à un premier service utilisant une chaîne de blocs mise en œuvre dans un réseau de communication.

Ce dispositif se caractérise par le fait qu'il comprend au moins une unité de traitement et au moins une mémoire propres à effectuer les opérations consistant, en cas d'accès d'un utilisateur à un second service chargé de générer des paires de clés cryptographiques :
- à contrôler l'utilisation de ce second service afin qu'il se connecte à un premier équipement de communication appartenant à un fournisseur d'identité afin de requérir une authentification de cet utilisateur, et, en cas d'authentification, qu'il fournisse un identifiant d'utilisateur, qui identifie l'utilisateur de manière unique et stable dans le temps, puis
- à déclencher l'utilisation de cet identifiant d'utilisateur par le second service afin que ce dernier génère une paire de clés cryptographiques, puis
- à contrôler l'exploitation de cette paire pour que l'utilisateur accède au premier service pour utiliser la chaîne de blocs.

L'invention sera mieux comprise à l'aide de la description qui va suivre, donnée uniquement à titre d'exemple et faite en se référant aux dessins annexés dans lesquels :
[Fig.1] la figure 1 illustre schématiquement et fonctionnellement un exemple de réseau de communication mettant en oeuvre une chaîne de blocs et comprenant un dispositif de contrôle selon l'invention,
[Fig.2] la figure 2 illustre schématiquement et fonctionnellement un exemple de réalisation d'un dispositif de contrôle selon l'invention, et
[Fig.3] la figure 3 illustre schématiquement un exemple d'algorithme mettant en œuvre un procédé de contrôle selon l'invention.

L'invention a notamment pour but de proposer un procédé de contrôle, et un dispositif de contrôle 1 associé, destinés à permettre le contrôle de l'accès d'un utilisateur à un premier service utilisant une chaîne de blocs (ou blockchain) mise en œuvre dans un réseau de communication 2 comprenant des nœuds 3-j.

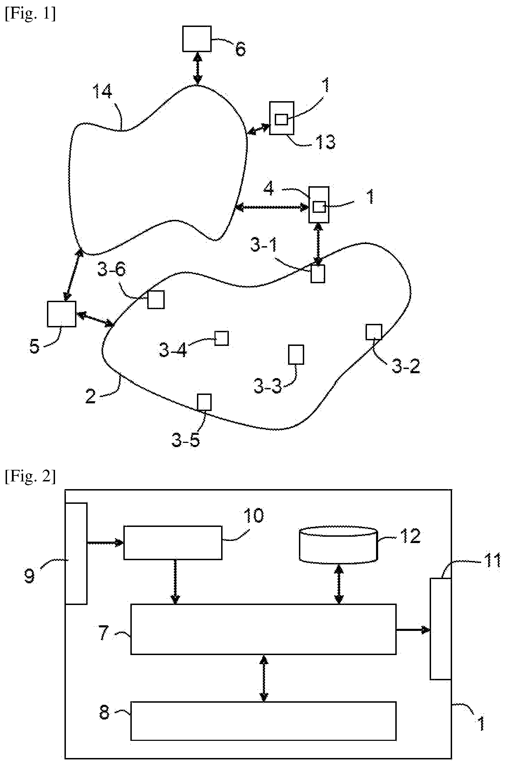

On a schématiquement et fonctionnellement représenté sur la figure 1 un exemple de réseau de communication 2 mettant en œuvre une chaîne de blocs et comprenant classiquement des nœuds 3-j (ici j = 1 à 6) permettant à des équipements de communication (notamment celui référencé 4) de se connecter à lui pour échanger des données et permettre des communications entre utilisateurs. Ces équipements de communication peuvent être des téléphones intelligents mobiles (ou « smartphones »), des tablettes électroniques, des serveurs, ou des ordinateurs (fixes ou portables), par exemple. On comprendra qu'un noeud 3-j est aussi un équipement de communication, mais appartenant au réseau de communication 2.

On considère ici que l'équipement de communication 4 est un téléphone intelligent mobile appartenant à un utilisateur, client de la chaîne de blocs mise en œuvre dans le réseau de communication 2 et utilisée par au moins un premier service, et comprenant une partie au moins d'un dispositif de contrôle 1 selon l'invention, sur lequel on reviendra plus loin. Le procédé de contrôle, selon l'invention, est mis en œuvre lorsque cet utilisateur souhaite accéder à ce premier service via son équipement de communication 4.

On notera que dans l'exemple illustré non limitativement sur la figure 1, le dispositif de contrôle 1 est réparti dans l'équipement de communication 4 et dans un autre équipement de communication 13 assurant un service intermédiaire (par exemple un service web). Dans ce cas, l'équipement de communication 4 peut assurer l'interface homme/machine vers ce service intermédiaire qui se charge d'effectuer toutes les opérations permettant d'accéder au premier service.

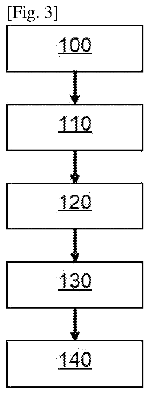

Comme illustré non limitativement par l'exemple d'algorithme de la figure 3, un procédé de contrôle selon l'invention comprend une étape 100-140 qui peut être mise en œuvre au moins partiellement par un dispositif de contrôle 1 selon l'invention ou bien par un programme d'ordinateur dédié exécuté sur au moins un équipement à processeur(s) ou au moins un ordinateur. Ce programme d'ordinateur dédié comprend des instructions pour l'exécution des étapes du procédé de contrôle et est téléchargeable depuis un réseau de communication et/ou enregistré sur un support lisible par ordinateur et/ou exécutable par au moins un processeur (ou une unité de traitement) d'un équipement (ici au moins l'équipement de communication 4).

L'étape 100-140 précitée comprend tout d'abord une sous-étape 100 dans laquelle l'utilisateur accède, au moyen de son équipement de communication 4 (et via l'éventuel équipement de communication 13), à un second service qui est chargé de générer des paires de clés cryptographiques.

L'étape 100-140 précitée comprend ensuite une sous-étape 110 dans laquelle l'utilisateur utilise ce second service pour se connecter à un premier équipement de communication 5 qui appartient à un fournisseur d'identité, afin d'être authentifié. Par exemple, ce premier équipement de communication 5 peut être un serveur, accessible via le réseau de communication 2.

L'authentification de l'utilisateur peut se faire classiquement par fourniture par ce dernier de son identifiant (ou « login ») et/ou de son mot de passe (ou « password »), par exemple.

En l'absence d'authentification de l'utilisateur, le procédé prend fin et donc l'utilisateur ne peut pas accéder au premier service utilisant la chaîne de blocs. En revanche, en cas d'authentification, l'étape 100-140 comprend ensuite une sous-étape 120 dans laquelle le premier équipement de communication 5 fournit à l'utilisateur, via le second service, un identifiant d'utilisateur (ou « subject identifier »), qui l'identifie de manière unique et stable dans le temps.

L'étape 100-140 comprend ensuite une sous-étape 130 dans laquelle le second service utilise l'identifiant d'utilisateur (fourni dans la sous-étape 120) pour générer une paire de clés cryptographiques qu'il transmet à l'utilisateur (et plus précisément à son équipement de communication 4).

L'étape 100-140 comprend enfin une sous-étape 140 dans laquelle l'utilisateur exploite (au moyen de son équipement de communication 4 et via un noeud 3-1) la paire de clés cryptographiques (générée dans la sous-étape 130) afin d'accéder au premier service pour utiliser la chaîne de blocs.

Grâce à l'invention, on dispose d'un service qui permet de passer d'une authentification (via un fournisseur d'identité) à une chaîne de blocs dont l'accès dépend de clés cryptographiques pour un utilisateur identifié et authentifié.

On notera que dans l'étape 100-140, et plus précisément dans sa sous-étape 110, le premier équipement de communication 5 peut se connecter à un second équipement de communication 6 chargé de réaliser l'authentification. Dans ce cas, le fournisseur d'identité délègue l'authentification des utilisateurs à une société externe (publique ou privée) qui est autorisée (ou habilitée) à le faire et qui possède le second équipement de communication 6. Par exemple, ce second équipement de communication 6 peut être un serveur accessible via un réseau de communication 14. La délégation de l'authentification à une société externe nécessite que le premier équipement de communication 5 dispose d'une interface de programmation d'application (ou API (« Application Programming Interface »)) qui est par exemple compatible « Openld Connect ».

On notera également que dans l'étape 100-140, et plus précisément dans sa sous-étape 130, on (le second service) peut commencer par initialiser un générateur d'aléatoire cryptographique avec une information secrète (ou un secret) et l'identifiant d'utilisateur afin d'obtenir un aléatoire. Puis, on (le second service) peut générer la paire de clés cryptographiques à partir de cet aléatoire obtenu. Ce mode particulier de génération de clés cryptographiques permet de garantir avantageusement que ces dernières sont déterministes, et donc que les clés sont les mêmes à chaque fois pour un utilisateur et un même certificat (possibilité de réaliser certaines opérations cryptographiques parce que les clés ne sont pas éphémères).

Par exemple, le générateur d'aléatoire cryptographique peut être de type chacha20. Il est rappelé que chacha20 utilise à la fois une clé et un nonce. Par exemple, pour ne pas demander au fournisseur d'identité des informations qui sont secrètes, la clé précitée peut être une clé commune (c'est-à-dire utilisée pour tous les utilisateurs), et le nonce peut être dérivé des données de l'utilisateur par le processus de compression (comme pour le secret que l'on compresse (par exemple avec sha256)).

Mais d'autres types de générateur d'aléatoire cryptographique peuvent être utilisés, et notamment HC-128, Rabbit, Salsa20/12, SOSEMANUK et Trivium.

On notera également que dans l'étape 100-140, et plus précisément dans sa sous-étape 130, avant l'initialisation, lorsque l'information secrète (ou secret) présente une taille qui est supérieure à une taille prédéfinie on (le second service) peut compresser cette information secrète afin qu'elle présente cette taille prédéfinie. Dans ce cas, c'est l'information secrète compressée qui est utilisée pour initialiser le générateur d'aléatoire cryptographique.

Par exemple, dans la sous-étape 130 on (le second service) peut compresser l'information secrète au moyen d'une fonction de hachage cryptographique. A titre d'exemple cette fonction de hachage cryptographique peut être SHA256, BLAKE-256, Keccak, Whirlpool, ou MD6.

On notera également que lorsque la chaîne de blocs est publique, comme c'est par exemple le cas d'Ethereum ou de Bitcoin, l'accès de l'utilisateur au premier service ne nécessite que la fourniture de la paire de clés cryptographiques (générée dans la sous-étape 130). Dans ce cas, les clés cryptographiques peuvent être de type Secp256k1, par exemple. En revanche, lorsque la chaîne de blocs est privée, comme c'est par exemple le cas d'Hyperledger Fabric, l'accès de l'utilisateur au premier service nécessite la fourniture par cet utilisateur d'une paire de clés cryptographiques, dont l'une est un certificat représentatif d'une clé publique certifiée dans la sous-étape 130. Dans ce cas, les clés cryptographiques peuvent être de type P-256, par exemple. Egalement dans ce cas, la clé publique doit être certifiée par une autorité de certification (ou MSP (« Membership Service Provider)). Par conséquent, pour créer un réseau de communication 2 portant la chaîne de blocs on doit avoir au moins une autorité de certification (ou MSP) utilisant au sein de ce réseau de communication 2 un système d'appartenance basé sur des certificats x.509 et la courbe elliptique P-256, comme par exemple « Fabric-CA », et un compte administrateur de cette autorité de certification (ou MSP) qui sert à enregistrer les utilisateurs. On notera que c'est le premier équipement de communication 5 qui fait une requête vers une API du MSP (par exemple Fabric-CA) pour obtenir le certificat, à partir de la clé publique pour l'utilisateur. Si c'est la première fois que l'utilisateur utilise le second service, il n'y a pas encore de certificat (car il n'est pas encore inscrit sur la chaine de blocs), et donc le premier équipement de communication 5 fait une autre requête à l'API du MSP (par exemple Fabric-CA) pour qu'elle génère un certificat pour l'utilisateur. Le premier équipement de communication 5 renvoie ensuite à l'équipement de communication 4 de l'utilisateur les deux clés cryptographiques, dont l'une est le certificat (qui contient la clé publique certifiée)), par exemple encodées en PEM (« Privality Enhanced Mail »). Ce nouveau certificat est stocké dans le réseau de communication 2 pour des utilisations ultérieures. Il est important de noter que l'on considère ici que le certificat constitue l'une des deux clés cryptographiques.

On notera également que le second service utilisé doit être constant dans son algorithme de génération et dans le temps, afin de régénérer des mêmes clés pour un même utilisateur.

Comme illustré non limitativement sur la figure 2, le dispositif de contrôle 1 comporte au moins une unité de traitement 7 et au moins une mémoire 8 propres à effectuer les opérations consistant, en cas d'accès de l'utilisateur, via un nœud (ici 3-1), au second service, à contrôler l'utilisation de ce second service afin qu'il se connecte au premier équipement de communication 5 appartenant au fournisseur d'identité afin de requérir l'authentification de l'utilisateur, et, en cas d'authentification, qu'il fournisse un identifiant d'utilisateur, qui identifie l'utilisateur de manière unique et stable dans le temps, puis à déclencher l'utilisation de cet identifiant d'utilisateur par le second service afin que ce dernier génère une paire de clés cryptographiques, puis à contrôler la fourniture d'au moins cette paire au premier service pour que l'utilisateur accède à ce dernier.

L'unité de traitement 7 peut, par exemple, être un processeur, éventuellement de signal numérique (ou DSP (« Digital Signal Processor »)). La mémoire 8 stocke des fichiers de données et de programme(s) d'ordinateur dont les instructions sont destinées à être exécutées par l'unité de traitement 7 (ou processeur). Cette mémoire 8 peut, par exemple, être de type RAM (« Random Access Memory »). Cette unité de traitement 7 et cette mémoire 8 sont agencées pour effectuer ensemble les opérations contribuant notamment au contrôle de l'accès au premier service.

Dans l'exemple illustré non limitativement sur la figure 2, le dispositif de contrôle 1 est agencé sous la forme d'un calculateur équipant l'équipement de communication 4 de l'utilisateur et l'équipement de communication 13 (assurant le service intermédiaire). Mais le dispositif de contrôle 1 pourrait faire partie d'un ou plusieurs calculateurs assurant au moins une autre fonction au sein de l'équipement de communication 4 et/ou de l'équipement de communication 13. Comme illustré, le calculateur 1 peut aussi comprendre une interface d'entrée 9 pour la réception d'au moins les identifiant/mot de passe de l'utilisateur, les clés cryptographiques pour les utiliser dans des calculs ou traitements, éventuellement après les avoir mis en forme et/ou démodulés et/ou amplifiés, de façon connue en soi, au moyen d'un processeur de signal numérique 10. De plus, ce calculateur 1 peut aussi comprendre une interface de sortie 11, notamment pour fournir des requêtes et les identifiant/mot de passe de l'utilisateur au second service et les clés cryptographiques au premier service, et/ou une mémoire de masse 12.

Le calculateur 1 peut être réalisé sous la forme d'une combinaison de circuits ou composants électriques ou électroniques (ou « hardware »), éventuellement micro-programmés ou micro-câblées, et de modules logiciels (ou « software »).

On notera également que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Procédé de contrôle de l'accès à un premier service utilisant une chaîne de blocs mise en œuvre dans un réseau de communication (2), **caractérisé en ce qu'**il comprend une étape (100-140) dans laquelle :
- un utilisateur accède à un second service chargé de générer des paires de clés cryptographiques au cours d'une première sous-étape (100), puis
- ledit utilisateur utilise ce second service pour se connecter à un premier équipement de communication (5) appartenant à un fournisseur d'identité afin d'être authentifié au cours d'une deuxième sous-étape (110), puis
- en cas d'authentification, ledit premier équipement de communication (5) fournit audit utilisateur, via ledit second service, un identifiant d'utilisateur, qui l'identifie de manière unique et stable dans le temps, au cours d'une troisième sous-étape (120), puis
- ledit second service utilise ledit identifiant d'utilisateur fourni pour générer une paire de clés cryptographiques qu'il transmet audit utilisateur au cours d'une quatrième sous-étape (130), puis
- ledit utilisateur exploite ladite paire générée pour accéder audit premier service pour utiliser la chaîne de blocs au cours d'une cinquième sous-étape (140).

2. Procédé selon la revendication 1, **caractérisé en ce que** dans ladite étape (100-140) ledit premier équipement de communication (5) se connecte à un second équipement de communication (6) chargé de réaliser ladite authentification.

3. Procédé selon la revendication 1 ou 2, **caractérisé en ce que** dans ladite étape (100-140) on initialise un générateur d'aléatoire cryptographique avec une information secrète et ledit identifiant d'utilisateur afin d'obtenir un aléatoire, puis on génère ladite paire de clés cryptographiques à partir dudit aléatoire obtenu.

4. Procédé selon la revendication 3, **caractérisé en ce que** dans ladite étape (100-140) on initialise un générateur d'aléatoire cryptographique de type chacha20.

5. Procédé selon la revendication 3 ou 4, **caractérisé en ce que** dans ladite étape (100-140), avant ladite initialisation, lorsque ladite information secrète présente une taille supérieure à une taille prédéfinie on compresse ladite information secrète afin qu'elle présente ladite taille prédéfinie.

6. Procédé selon la revendication 5, **caractérisé en ce que** dans ladite étape (100-140) on compresse ladite information secrète au moyen d'une fonction de hachage cryptographique.

7. Procédé selon l'une des revendications 1 à 6, **caractérisé en ce que** dans ladite étape (100-140) ledit utilisateur fournit audit premier service ladite paire de clés cryptographiques générée, dont l'une est un certificat représentatif d'une clé publique certifiée, afin d'accéder audit premier service.

8. Programme d'ordinateur téléchargeable depuis un réseau de communication et/ou enregistré sur un support lisible par ordinateur et/ou exécutable par au moins un processeur, **caractérisé en ce qu'**il comprend des instructions pour l'exécution des étapes d'un procédé de contrôle selon l'une quelconque des revendications 1 à 7, lorsque ledit programme est exécuté sur au moins un équipement à processeur(s) (4) ou au moins un ordinateur.

9. Dispositif de contrôle (1) pour contrôler l'accès à un premier service utilisant une chaîne de blocs mise en œuvre dans un réseau de communication (2), **caractérisé en ce qu'**il comprend au moins une unité de traitement (7) et au moins une mémoire (8) propres à effectuer les opérations consistant, en cas d'accès d'un utilisateur à un second service chargé de générer des paires de clés cryptographiques, à contrôler l'utilisation de ce second service afin qu'il se connecte à un premier équipement de communication (5) appartenant à un fournisseur d'identité afin de requérir une authentification dudit utilisateur, et, en cas d'authentification, qu'il fournisse un identifiant d'utilisateur, qui identifie ledit utilisateur de manière unique et stable dans le temps, puis à déclencher l'utilisation dudit identifiant d'utilisateur par ledit second service afin que ce dernier génère une paire de clés cryptographiques, puis à contrôler l'exploitation de ladite paire pour que ledit utilisateur accède audit premier service pour utiliser la chaîne de blocs.

## Patentansprüche

1. Verfahren zur Steuerung des Zugriffs auf einen ersten Dienst unter Verwendung einer in einem Kommunikationsnetzwerk (2) implementierten Blockkette, **dadurch gekennzeichnet, dass** es einen Schritt (100-140) umfasst, wobei:
- ein Benutzer auf einen zweiten Dienst zugreift, der dafür zuständig ist, während eines ersten Unterschritts (100) kryptografische Schlüsselpaare zu generieren, und dann
- der Benutzer diesen zweiten Dienst verwendet, um sich mit einer ersten Kommunikationsausrüstung (5) eines Identitätsanbieters zu verbinden, um während eines zweiten Unterschritts (110) authentifiziert zu werden, und dann
- im Falle einer Authentifizierung, die erste Kommunikationsausrüstung (5) dem Benutzer über den zweiten Dienst während eines dritten Unterschritts (120) eine Benutzerkennung bereitstellt, die ihn eindeutig und im Laufe der Zeit stabil identifiziert, und dann
- der zweite Dienst die bereitgestellte Benutzerkennung verwendet, um ein kryptografisches Schlüsselpaar zu generieren, das er dem Benutzer während eines vierten Unterschritts (130) übermittelt, und dann
- der Benutzer das generierte Paar nutzt, um auf den ersten Dienst zuzugreifen, um die Blockkette während eines fünften Unterschritts (140) zu verwenden.

2. Verfahren nach Anspruch 1, **dadurch gekennzeichnet, dass** sich in dem Schritt (100-140) die erste Kommunikationsausrüstung (5) mit einer zweiten Kommunikationsausrüstung (6) verbindet, die für die Durchführung der Authentifizierung zuständig ist.

3. Verfahren nach Anspruch 1 oder 2, **dadurch gekennzeichnet, dass** in dem Schritt (100-140) ein kryptografischer Zufallsgenerator mit einer geheimen Information und der Benutzerkennung initialisiert wird, um einen Zufallswert zu erhalten, und dann das kryptografische Schlüsselpaar aus dem erhaltenen Zufallswert generiert wird.

4. Verfahren nach Anspruch 3, **dadurch gekennzeichnet, dass** in dem Schritt (100-140) ein kryptographischer Zufallsgenerator vom Typ chacha20 initialisiert wird.

5. Verfahren nach Anspruch 3 oder 4, **dadurch gekennzeichnet, dass** in dem Schritt (100-140), vor der Initialisierung, wenn die geheime Information eine Größe aufweist, die größer als eine vordefinierte Größe ist, die geheime Information komprimiert wird, damit sie die vordefinierte Größe aufweist.

6. Verfahren nach Anspruch 5, **dadurch gekennzeichnet, dass** in dem Schritt (100-140) die geheimen Informationen mittels einer kryptographischen Hash-Funktion komprimiert werden.

7. Verfahren nach einem der Ansprüche 1 bis 6, **dadurch gekennzeichnet, dass** der Benutzer in dem Schritt (100-140) dem ersten Dienst das generierte kryptografische Schlüsselpaar bereitstellt, von dem einer ein Zertifikat ist, das einen zertifizierten öffentlichen Schlüssel repräsentiert, um auf den ersten Dienst zuzugreifen.

8. Computerprogramm, das von einem Kommunikationsnetzwerk heruntergeladen und/oder auf einem computerlesbaren Medium und/oder von mindestens einem Prozessor ausgeführt werden kann, **dadurch gekennzeichnet, dass** es Anweisungen zum Ausführen der Schritte eines Steuerungsverfahrens nach einem der Ansprüche 1 bis 7 umfasst, wenn das Programm auf mindestens einer Prozessorausrüstung (4) oder mindestens einem Computer ausgeführt wird.

9. Steuerungsvorrichtung (1) zur Steuerung des Zugriffs auf einen ersten Dienst unter Verwendung einer Blockkette, die in einem Kommunikationsnetzwerk (2) implementiert ist, **dadurch gekennzeichnet, dass** sie mindestens eine Verarbeitungseinheit (7) und mindestens einen Speicher (8) umfasst, die dazu geeignet sind, bei Zugriff eines Benutzers auf einen zweiten Dienst, der dafür zuständig ist, kryptografische Schlüsselpaare zu generieren, die Vorgänge auszuführen, die darin bestehen, die Nutzung dieses zweiten Dienstes zu steuern, damit er sich mit einer ersten Kommunikationsausrüstung (5) eines Identitätsanbieters verbindet, um eine Authentifizierung des Benutzers zu verlangen, und im Falle einer Authentifizierung eine Benutzerkennung bereitstellt, die den Benutzer eindeutig und im Laufe der Zeit stabil identifiziert, dann die Verwendung der Benutzerkennung durch den zweiten Dienst auszulösen, damit dieser ein kryptografisches Schlüsselpaar generiert, und dann die Nutzung des Paars zu steuern, damit der Benutzer auf den ersten Dienst zugreift, um die Blockkette zu verwenden.

## Claims

1. A method for controlling access to a first service using a blockchain implemented in a communication network (2), **characterized in that** it comprises a step (100-140) wherein:
- a user accesses a second service responsible for generating cryptographic key pairs during a first sub-step (100), then
- said user uses this second service to connect to a first communication device (5) belonging to an identity provider in order to be authenticated during a second sub-step (110), then
- in case of authentication, said first communication device (5) provides said user, via said second service, with a user identifier that identifies them uniquely and stably over time, during a third sub-step (120), then
- said second service uses said provided user identifier to generate a pair of cryptographic keys which it transmits to said user during a fourth sub-step (130), then
- said user uses said generated pair to access said first service to use the blockchain during a fifth sub-step (140).

2. The method according to claim 1, **characterized in that** in said step (100-140), said first communication equipment (5) connects to a second communication equipment (6) responsible for performing said authentication.

3. The method according to claim 1 or 2, **characterized in that** in said step (100-140), a cryptographic random number generator is initialized with secret information and said user identifier in order to obtain a random number, and then said pair of cryptographic keys is generated from said obtained random number.

4. The method according to claim 3, **characterized in that** in said step (100-140), a cryptographic random number generator of the chacha20 type is initialized.

5. The method according to claim 3 or 4, **characterized in that** in said step (100-140), before said initialization, when said secret information has a size greater than a predefined size, said secret information is compressed so that it has said predefined size.

6. The method according to claim 5, **characterized in that** in said step (100-140), said secret information is compressed by means of a cryptographic hash function.

7. The method according to one of claims 1 to 6, **characterized in that** in said step (100-140), said user provides said first service with said generated pair of cryptographic keys, one of which is a certificate representative of a certified public key, in order to access said first service.

8. A computer program downloadable from a communication network and/or stored on a medium readable by a computer and/or executable by at least one processor, **characterized in that** it comprises instructions for executing the steps of a control method according to any of claims 1 to 7, when said program is executed on a device with at least one processor (4) or at least one computer.

9. A control device (1) for controlling access to a first service using a blockchain implemented in a communication network (2), **characterized in that** it comprises at least one processing unit (7) and at least one memory (8) capable of performing the operations consisting, in case of a user accessing a second service responsible for generating cryptographic key pairs, of controlling the use of this second service so that it connects to a first communication device (5) belonging to an identity provider in order to request authentication of said user, and, in case of authentication, it provides a user identifier that identifies said user uniquely and stably over time, then triggering the use of said user identifier by said second service so that the latter generates a cryptographic key pair, then controlling the use of said pair so that said user accesses said first service to use the blockchain.
